# EUROPEAN PATENT APPLICATION

(11) **EP 1 708 416 A2**
(43) Date of publication of application: **04.10.2006**
(21) Application number: 05256944.9
(22) Date of filing: 09.11.2005
(51) Int. Cl.: H04L 12/28

(54) **Communication system with access point**

(30) Priority: 29.03.2005 CN 200510033910
(71) Applicant: Hon Hai Precision Industry Co., Ltd., Tu-cheng City, Taipei Hsien, Taiwan (TW)
(72) Inventor: Chen, Ming-Chieh, Tu-cheng City Taipei Hsien (TW); Tsai, Ming-Chih, Tu-cheng City Taipei Hsien (TW); Kao, Chien-Chung, Tu-cheng City Taipei Hsien (TW); Lai, Chun-Chie, Tu-cheng City Taipei Hsien (TW)
(74) Representative: Stuttard, Garry Philip

(57) **Abstract**

A communication system includes a wireless network terminal (30), a wired network terminal (10), and a communication device (20). The communication device includes a Local Area Network (LAN) controller module (22), a process unit (24) and a transcoder (26). When the wired network terminal transmits a first kind of signal input to the communication device, the first kind of input signal is processed by the process unit and transformed into a first kind of output signal by the transcoder. Then the first kind of output is transmitted to the wireless network terminal. When the wireless network terminal transmits a second kind of signal input to the communication device. The second kind of input signal is transformed into the second kind of output signal by the transcoder. The second kind of output signal is processed by the process unit, and is then transmitted to the wired network terminal.

## Description

### BACKGROUND

### 1. Field of the Invention

The present invention relates to communication systems, and especially to a communication system with an access point (AP).

### 2. General Background

In many conventional data transmission systems, an access point is used to connect a wireless local area network with a wired local area network or a wide area network. Any of wireless terminal devices, such as Dual Mode Phones, can be connected to the wired local area network or the wide area network. The wireless terminal devices can share resources on the wired local area network or the wide area network. Simultaneously, any of wired terminal devices, such as telephones, can be connected to the wireless local area network, and can share resources on the wireless local area network.

However, there are various different communication protocols between the wireless local area network and the wired local area network or the wide area network. That is, there is a problem of intercommunication between the wireless terminal device using the wireless local area network communication protocol and the wired terminal device using the wired local area network protocol or the wide area network communication protocol. Further, the access point generally cannot transform a wireless local area network communication protocol signal into a wired local area network communication protocol signal. Thus, terminal devices must also include the ability to transform signals. Accordingly, the costs of the wireless terminal devices and the wired terminal devices are increased.

Therefore, a heretofore unaddressed need exists in the industry to overcome the aforementioned deficiencies and inadequacies.

### SUMMARY

In an exemplary embodiment, a communication system comprises a wireless network terminal, a wired network terminal, and a communication device connecting the wireless network terminal and the wired network terminal. The communication device comprises a Local Area Network (LAN) controller module connected to the wired network terminal, a process unit connected to the LAN controller module, and a transcoder connecting the process unit with the wireless network terminal. When the wired network terminal transmits a first kind of signal input to the communication device, the first kind of input signal is processed by the process unit and transformed into a first kind of output signal by the transcoder. Then the first kind of output signal is transmitted to the wireless network terminal. When the wireless network terminal transmits a second kind of signal input to the communication device, the second kind of input signal is transformed into a second kind of output signal by the transcoder, and the second kind of output signal is processed by the process unit. Then, the second kind of output signal is transmitted to the wired network terminal. Each of the wireless network terminal and the wired network terminal need only support a single communication protocol.

Other advantages and novel features will become more apparent from the following detailed description when taken in conjunction with the accompanying drawings, in which:

### BRIEF DESCRIPTION OF THE DRAWINGS

FIG. 1 is a schematic diagram of a communication system in accordance with a preferred embodiment of the present invention; and

FIG. 2 is a block diagram of the communication system of FIG. 1, showing details of a network communication device thereof, but not showing an adaptor thereof.

### DETAILED DESCRIPTION OF THE EMBODIMENTS

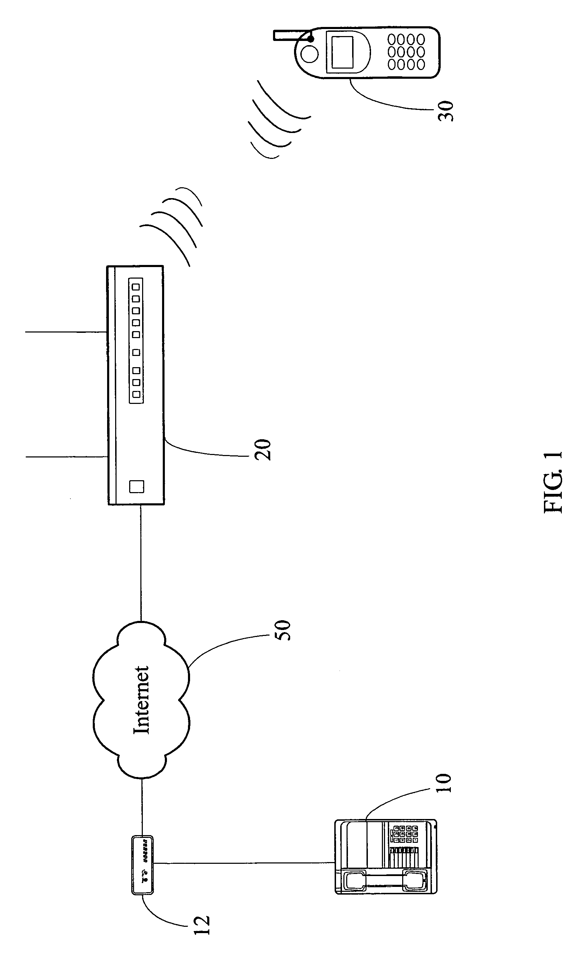

FIG. 1 is a schematic diagram of a communication system in accordance with an exemplary embodiment of the present invention. The communication system comprises a wired network terminal 10, a network communication device 20, and a wireless network terminal 30.

A first kind of signal, such as a voice signal, according to a communication protocol such as G.723 or G.729 is transmitted from the wired network terminal 10, such as a telephone, to the network communication device 20, such as an access point, through an adaptor 12 and the Internet 50. At entry into the network communication device 20, the first kind of signal is designated herein as a first kind of input signal. In the network communication device 20, the first kind of input signal is transformed into a first kind of output signal according to another communication protocol such as G.711. Then the first kind of output signal is transmitted to the wireless network terminal 30, such as a Dual Mode Phone. Conversely, the wireless network terminal 30 transmits a second kind of signal to the network communication device 20. At entry into the network communication device 20, the second kind of signal is designated herein as a second kind of input signal. In the network communication device 20, the second kind of input signal is transformed into a second kind of output signal, and is then transmitted to the wired network terminal 10 through the adaptor 12 and the Internet 50. In alternative embodiments, the first and second kinds of signals are other kinds of network communication signals that can be transformed appropriately.

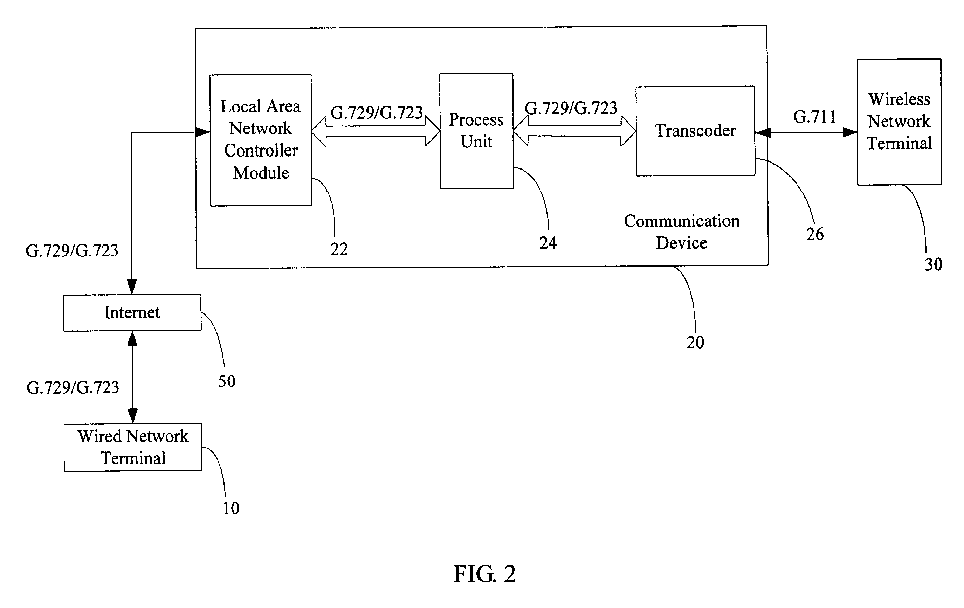

FIG. 2 is a block diagram of the communication system, showing details of the network communication device 20, but not showing the adaptor 12. The network communication device 20 comprises a Local Area Network (LAN) controller module 22, a process unit 24, and a transcoder 26. The transcoder 26 can be a Digital Signal Processing (DSP) chip or be integrated into the process unit 24. The transcoder 26 is used for transforming signals received from one device according to the protocol of the destination receiving device, such as the wireless network terminal 30 or the wired network terminal 10. For example, when the wireless network terminal 30 sends the second kind of signal to the network communication device 20, the transcoder 26 transforms the second kind of input signal into the second kind of output signal according to a special code transforming protocol, and sends the second kind of output signal to the process unit 24. In the process unit 24, the second kind of output signal is compressed, packaged, and grouped, and is then transmitted to the wired network terminal 10 through the LAN controller module 22 and the Internet 50. When the LAN controller module 22 of the network communication device 20 receives the first kind of input signal from the Internet 50, the first kind of input signal is transmitted to the process unit 24. In the process unit 24, the first kind of input signal is decompressed and unpackaged, and is then transmitted to the transcoder 26. In the transcoder 26, the first kind of input signal is transformed into the first kind of output signal according to a special code transforming protocol, and subsequently the first kind of output signal is sent to the wireless network terminal 30.

In this exemplary, the first kind of input signal and the second kind of output signal are in accordance with G.723 or G.729 protocol. The second kind of input signal and the first kind of output signal are in accordance with G.711 protocol.

Because the transcoder 26 is integrated in the network communication device 20, each of the wireless network terminal 30 and the wired network terminal 10 need only support a single communication protocol. For example, the wired network telephone 10 need only support G.729 or G.723, and the wireless network terminal 30 (e.g., Dual Mode Phone) need only support G 711.

It is believed that the present embodiments and their advantages will be understood from the foregoing description, and it will be apparent that various changes may be made thereto without departing from the spirit and scope of the invention or sacrificing all of its material advantages, the examples hereinbefore described merely being preferred or exemplary embodiments.

## Claims

1. A communication device for transforming signals between a wireless network terminal and a wired network terminal, the communication system comprising:
a Local Area Network (LAN) controller module for connecting to the wired network terminal;
a process unit connected to the LAN controller module; and
a transcoder for connecting the wireless terminal network with the process unit,
wherein when the wired network terminal transmits a first kind of signal input to the LAN controller module, the first kind of input signal is processed by the process unit and transformed into a first kind of output signal by the transcoder, and then the first kind of output signal is transmitted to the wireless network terminal; and when the wireless network terminal transmits a second kind of signal input to the transcoder, the second kind of input signal is transformed into a second kind of output signal by the transcoder and is processed by the process unit, and then the second kind of output signal is transmitted to the wired network terminal.

2. The communication device as claimed in claim 1, wherein the first and second input and output signals are voice signals.

3. The communication device as claimed in claim 1, wherein the first kind of input signal and the second kind of output signal are in accordance with G.723 protocol.

4. The communication device as claimed in claim 1, wherein the first kind of input signal and the second kind of output signal are in accordance with G.729 protocol.

5. The communication device as claimed in claim 1, wherein the second kind of input signal and the first kind of output signal are in accordance with G.711 protocol.

6. The communication device as claimed in claim 1, wherein the transcoder is a Digital Signal Processing (DSP) chip.

7. The communication device as claimed in claim 1, wherein the transcoder is integrated into the process unit.

8. A communication system comprising:
a wireless network terminal;
a wired network terminal; and
a communication device interconnecting the wireless network terminal and the wired network terminal, the communication device comprising a Local Area Network (LAN) controller module connected to the wired network terminal, a process unit connected to the LAN controller module, and a transcoder connecting the process unit with the wireless network terminal; wherein
when the wired network terminal transmits a first kind of signal input to the communication device, a first kind of input signal is processed by the process unit and transformed into a first kind of output signal by the transcoder, and then the first kind of output signal is transmitted to the wireless network terminal; and when the wireless network terminal transmits a second kind of signal input to the communication device, a second kind of input signal is transformed into a second first kind of output signal by the transcoder and is processed by the process unit, and then the second kind of output signal is transmitted to the wired network terminal.

9. The communication system as claimed in claim 8, wherein the communication device is an access point.

10. The communication system as claimed in claim 8, wherein the first and second input and output signals are voice signals.

11. The communication system as claimed in claim 10, wherein the first kind of input signal and the second kind of output signal are in accordance with G.723 protocol.

12. The communication system as claimed in claim 10, wherein the first kind of input signal and the second kind of output signal are in accordance with G.729 protocol.

13. The communication system as claimed in claim 10, wherein the first kind of output signal and the second kind of input signal are in accordance with G.711 protocol.

14. The communication system as claimed in claim 8, wherein the transcoder is a Digital Signal Processing (DSP) chip.

15. The communication system as claimed in claim 8, wherein the transcoder is integrated into the process unit.
